# EUROPEAN PATENT SPECIFICATION

(11) **EP 4 415 379 B1**
(45) Date of publication and mention of the grant of the patent: **22.04.2026**
(21) Application number: 24155960.8
(22) Date of filing: 06.02.2024
(51) Int. Cl.: H04N 25/773, H04N 25/75

(54) **IMAGING APPARATUS, METHOD, PROGRAM, AND STORAGE MEDIUM**
ABBILDUNGSVORRICHTUNG, VERFAHREN, PROGRAMM UND SPEICHERMEDIUM
APPAREIL D'IMAGERIE, PROCÉDÉ, PROGRAMME ET SUPPORT D'INFORMATIONS

(30) Priority: 10.02.2023 JP 2023019401
(43) Date of publication of application: 14.08.2024
(73) Proprietor: Canon Kabushiki Kaisha, Tokyo 146-8501 (JP)
(72) Inventor: KOBAYASHI, Takashi, Tokyo 146-8501 (JP)
(74) Representative: Canon Europe Limited

(56) References cited:
- US-A1- 2020 240 837
- US-A1- 2020 304 745
- US-A1- 2022 191 424

## Description

### BACKGROUND OF THE INVENTION

### Field of the Invention

The present invention relates to an apparatus including a photoelectric conversion device including an avalanche photodiode.

### Description of the Related Art

C. Zhang, "SPAD requirements from consumer electronics to automotive," Int. SPAD Sensor Workshop (2022) discusses a single photon avalanche diode (hereinbelow, referred to as a SPAD) sensor as a kind of image sensor. The SPAD sensor uses an avalanche amplification phenomenon, in which a strong electric field is applied to accelerate an electron to collide with other electrons to excite a plurality of electrons and then cause a phenomenon like an avalanche, generating a large amount of electric current. In this phenomenon, weak photons that have entered a pixel are converted into a large amount of electric current, allowing detection of them as an electric charge. The SPAD sensor has a mechanism that no noise is mixed in a signal that is read out, and it is, thus, expected to be applied as an image sensor. The SPAD sensor allows clear capture of images of objects without influence of noise even in a dark environment in particular, which leads to expectations of a wide variety of usage as an image sensor, such as monitoring use.
US2020/0240837 discloses a photoelectric conversion apparatus including a photodiode which causes avalanche multiplication, wherein a counter is configured to count a pulse generated by the avalanche multiplication and generate a count signal, and a control circuit is configured to perform control to bring the photodiode into a waiting state in which the avalanche multiplication is possible, and a stop state in which the avalanche multiplication is stopped. The control circuit performs control in a manner such that a ratio of a length of a period during which the photodiode is in the stop state to a length of a period during which the photodiode is in the waiting state for a period before a count value (a value of the count signal) reaches a threshold value is changed after the count value (the value of the count signal) reaches the threshold value.
US2022/0191424 discloses an imaging device using a solid-state imaging element, and discloses calculating the variation in the detection signals output from each pixel cell and correcting the detection signals on the basis of the calculated variation. The pixel cells each include an avalanche photodiode and output a voltage on which avalanche multiplication corresponding to the received count number of photons has been performed.

### SUMMARY OF THE INVENTION

According to a first aspect of the present invention, there is an imaging apparatus specified in claims 1 to 11. According to a second aspect of the present invention, there is a method specified in claim 12. According to a third aspect of the present invention, there is a program specified in claim 13. According to a fourth aspect of the present invention, there is a storage medium specified in claim 14.

Further features of the present invention will become apparent from the following description of embodiments with reference to the attached drawings.

### BRIEF DESCRIPTION OF THE DRAWINGS

Fig. 1 is a functional block diagram of an imaging apparatus.
Fig. 2 is a schematic diagram illustrating an example of an equivalent circuit of a pixel as an image sensor.
Fig. 3 is a flowchart illustrating an example of an image signal generation procedure.
Figs. 4A and 4B are graphs respectively illustrating a relationship between numbers of incident photons and numbers of pulses counted, and a relationship between numbers of pulses counted and image signal values.
Figs. 5A and 5B are diagrams respectively illustrating examples of a captured image and signal values of the captured image.
Fig. 6 is a flowchart illustrating processing performed by the imaging apparatus.
Fig. 7 is a diagram illustrating a system configuration of the imaging apparatus.
Fig. 8 is a table illustrating an example of a cumulative count value of each area.
Figs. 9A and 9B are diagrams each illustrating an example of a notification output by the imaging apparatus.

### DESCRIPTION OF THE EMBODIMENTS

Embodiments of the present invention will be described below with reference to the attached drawings.

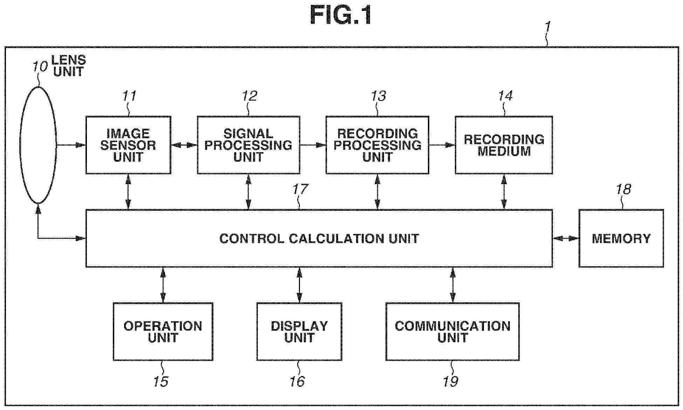

Hereinbelow, a first embodiment will be described. Fig. 1 is a functional block diagram of an imaging apparatus 1.

The imaging apparatus 1 includes avalanche photodiodes for photoelectrically converting optical images and captures images. A lens unit 10 is a lens unit controllable to provide a favorable image quality of an image captured by the imaging apparatus 1. The lens unit 10 includes a zoom lens, a focus lens, an image stabilizing lens, an aperture, and a neutral density (ND) filter.

An image sensor unit 11 is a photoelectric conversion device that includes photoelectric conversion elements. Light that has passed through the lens unit 10 reaches the image sensor unit 11, and is photoelectrically converted into an electrical signal in each pixel on the imaging plane of the image sensor unit 11, which generates a digital image (so-called a raw image). In the present embodiment, the image sensor unit 11 functions as a Single Photon Avalanche Diode (SPAD) sensor that counts the number of photons. In other words, the image sensor unit 11 is composed of avalanche photodiodes for photoelectrically converting optical images. The avalanche photodiodes constitute a two-dimensionally arranged pixel area.

A procedure of generating a digital image from output signals of the avalanche photodiodes (hereinbelow, referred to as a sensor signal) will be described below.

A signal processing unit 12 performs various kinds of image processing on digital images generated by the image sensor unit 11, to improve the image quality of the images for output. The image processing includes various kinds of correction processing to provide high image quality, such as fixed pattern noise removal processing, brightness correction processing with digital gains, demosaicing processing, white balance (WB) correction processing, edge enhancement processing, gamma correction processing, and noise reduction processing. Besides making corrections, the signal processing unit 12 performs recognition processing of detecting on an image a main object area to control the lens unit 10, such as focus control and aperture control. Further, the signal processing unit 12 generates evaluation values for the exposure control processing and the WB correction processing, and transmits the generated evaluation values to a control calculation unit 17. Examples of the evaluation values include automatic exposure (AE) evaluation values. Specific processing performed by the signal processing unit 12 will be described below in detail. An image signal that has undergone correction processing performed by the signal processing unit 12 is transmitted to a recording processing unit 13.

The recording processing unit 13 performs encoding processing on the image signal that has undergone correction processing performed by the signal processing unit 12, and transmits the encoded image signal to a recording medium 14. The recording medium 14 may be a general-purpose recording medium provided with a general-purpose interface (IF), attachable to and detachable from the imaging apparatus 1 (digital camera), or a storage device with a fixed storage capacity included in the imaging apparatus 1 in an undetachable manner. The recording medium 14 writes the transmitted encoded image signal in its non-volatile storage area to record the image as image data.

An operation unit 15 receives operations from users. Examples of means of receiving operations may include a mechanical button and an electrostatic capacitance method touch panel attached directly onto a display unit 16. Further, the examples may include an external remote controller connected to a general-purpose terminal and an external communication terminal wirelessly connected to the imaging apparatus 1, such as a smartphone.

The display unit 16 converts the image transmitted from the control calculation unit 17 into a format that allows display of the image on a display device. In this case, the display device may be directly attached to the imaging apparatus 1, or a display screen of a smartphone wirelessly connected to the imaging apparatus 1. Further, the display device may be detachably attached to the imaging apparatus 1 with a wired cable, or may be a display device of a terminal connected to a network via a local area network (LAN) cable.

The control calculation unit 17 includes a known central processor unit (CPU). The control calculation unit 17 receives an operation signal for the imaging apparatus 1 via the operation unit 15, generates control information for each block, and then transmits the generated control information to the lens unit 10, the image sensor unit 11, the signal processing unit 12, the recording processing unit 13, and the recording medium 14. Further, the control calculation unit 17 performs generation control on images to be transmitted to the display unit 16. In addition, a memory 18 is an area to store data for control calculation performed by the control calculation unit 17, and stores data in the middle of calculation or calculation results therein. The control calculation unit 17 performs calculation processing while referencing to the data in the memory 18 as appropriate. Further, the control calculation unit 17 is connected to a communication unit 19, and can output calculation results to an external device connected via the communication unit 19 to the control calculation unit 17.

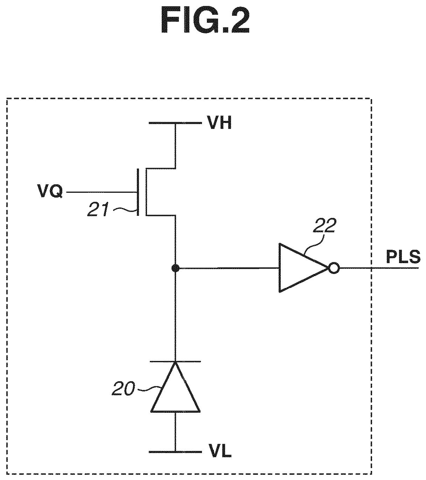

The pixels of the SPAD sensor as the image sensor unit 11 will now be described with reference to an equivalent circuit diagram in Fig. 2. Each pixel includes a photodiode 20, a quench resistor 21, and a buffer 22. The photodiode 20 in Fig. 2 is a SPAD. The photodiode 20 operates in a Geiger mode via an incident photon as a trigger, when a reverse voltage higher than a breakdown voltage is applied. For this reason, a reverse bias voltage higher than the breakdown voltage with a voltage VH to be applied to the SPAD is required. A photon incident on the photodiode 20 causes an avalanche current. A quench voltage VQ applied to the quench resistor 21 is variable, allowing control of the termination of the avalanche amplification of the avalanche current caused in the photodiode 20 by dropping the reverse bias voltage with a quench resistance value. In the present embodiment, the quench resistor 21 may be a metal-oxide semiconductor field-effect transistor (MOSFET), or may be another semiconductor device with a quench function. A threshold voltage is set for the buffer 22, and a high (H) level is output during a certain period when an input voltage fluctuates. Thus, the buffer 22 has a waveform shaping function. In this way, a signal subjected to waveform shaping through the buffer 22 is output as a pulse waveform signal (PLS). A counter circuit provided in the subsequent course counts the number of pulse waveform signals, and the number of pulses counted during a predetermined period is output as a sensor signal value of the avalanche amplification. The sensor signal value is the number of photons counted per unit time, and can be regarded as the number of times of the avalanche amplification. The circuit configuration of each pixel of the SPAD sensor has been described using the simple example including the photodiode 20, the quench resistor 21, and the buffer 22, but the circuit configuration of each pixel may include other circuit elements or semiconductor devices.

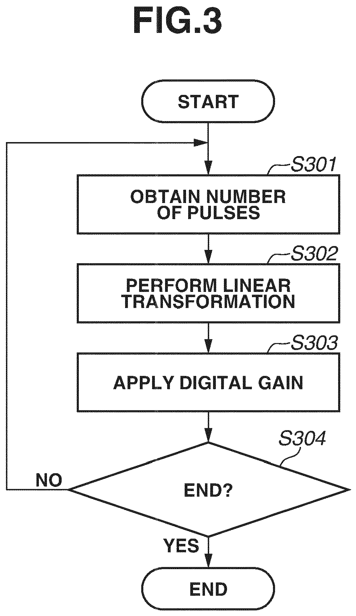

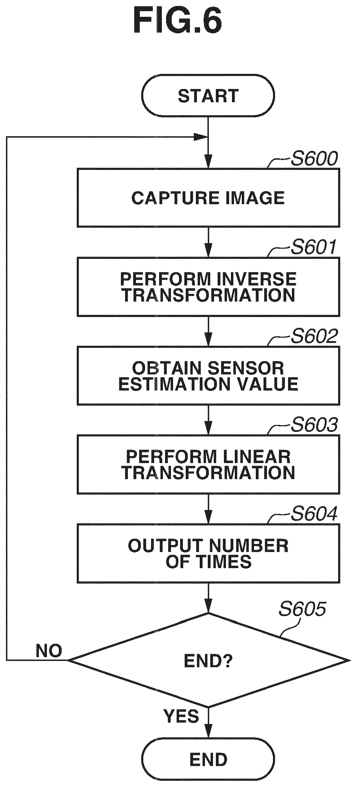

Processing in which the signal processing unit 12 identifies an image signal value from a sensor signal value will now be described with reference to a flowchart in Fig. 3. In addition, a part of the processing illustrated in Fig. 3 is carried out by the control calculation unit 17 as a CPU included in the imaging apparatus 1 running a computer program (control method) stored in a memory, such as the recording medium 14. However, a part of or all of the processing may be carried out using hardware components. Examples of the hardware components that can be used include an application specific integrated circuit (ASIC), a Field Programmable Gate Array (FPGA), and a processor, such as a reconfigurable processor and a digital signal processor (DSP). Further, the processing illustrated in the flowchart in Fig. 3 may be performed by function blocks in different devices connected with each other via signal paths, and thus, the function blocks may be not in a housing. Further, this description of the function blocks for the processing applies to processing to be described below with reference to a flowchart in Fig. 6.

First, in step S301, the signal processing unit 12 obtains the number of pulses counted for each pixel by the image sensor unit 11 as an output signal of the pixel.

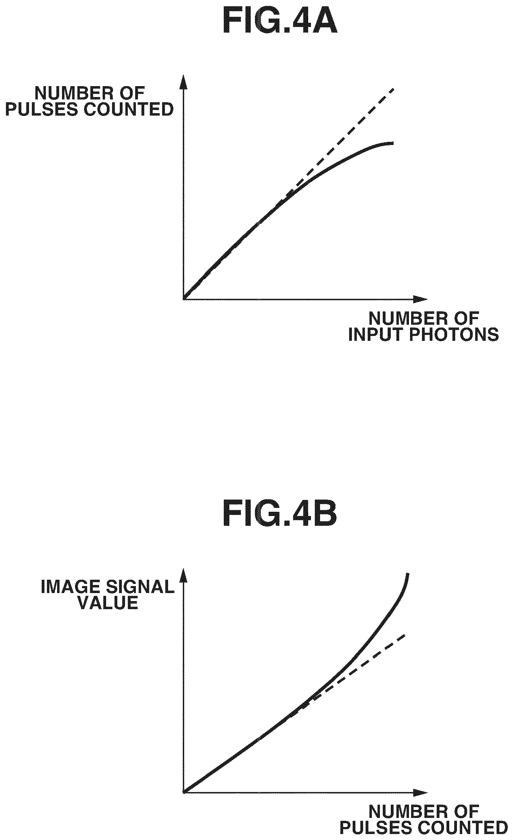

In step S302, the signal processing unit 12 performs linear transformation on the obtained sensor signal value (number of pulses) of each pixel using a predetermined function corresponding to the characteristics of the image sensor unit 11, to acquire a first image signal value. The SPAD sensor has a limit to time resolution for counting photons, and may erroneously count an extremely large number of photons per unit time without separating the photons one by one. As a result, with a large number of photons, the number of pulses and the number of photons do not linearly change, and have a non-linear correlation as illustrated in Fig. 4A. In this case, the non-linear characteristic is represented as a probability function of the number of pulses. The number of photons and the number of pulses have a non-linear correlation therebetween, and the number of photons with linearity can be calculated by transforming the number of pulses observed using an inverse function with a non-linear characteristic. Fig. 4B illustrates an inverse transformation characteristic for transforming the number of pulses into the number of incident photons. In this way, the transformation of sensor signal values with the predetermined probability function using the inverse characteristic of the probability function produces image signal values linear to the number of photons. In addition, the sensor signal value levels off when the SPAD sensor receives a predetermined quantity of light or more. Thus, the predetermined linear transformation may be performed only if the sensor signal value is a predetermined value or more.

In step S303, the signal processing unit 12 amplifies the first image signal value with a digital gain as a method for exposure control to adjust the brightness of the image. This processing provides a second image signal value that changes linearly with respect to the number of photons and has an appropriate brightness. With reference to Fig. 3, the linear transformation processing and the digital gain processing have been described as the transformation processing on the number of pulses for each pixel, but other processing may be included. For example, the transformation processing may include fixed pattern noise (FPN) correction processing for detecting and correcting defective pixels, shading correction processing for correcting an uneven black level within an image area, and optical correction processing for correcting degradation due to the characteristics of the optical lens. Further, the transformation processing may include the WB correction processing for adjusting the WB of images, the edge enhancement processing, and the noise reduction processing. In step S304, the control calculation unit 17 determines whether to end the imaging performed by the imaging apparatus 1. In a case where the imaging is continued (NO in step S304), the processing returns to step S301 to repeat the processing in steps S301 to 303.

As a characteristic of the SPAD sensor, a large amount of electric current flows in the avalanche amplification phenomenon via an incident photon, and the number of photons can be counted. On the other hand, to generate the avalanche amplification phenomenon, a reverse bias voltage exceeding a breakdown voltage needs to be applied, which means that a large amount of electric current flows with a high voltage being applied. On the premise that the SPAD sensor is used as an image sensor, images of 30 frames or more per second to be captured in video imaging causes large amounts of electric current to repeatedly flow in circuit elements in each pixel, which results in the application of an extremely heavy load. Further, the large avalanche current raises local temperatures. This raises the possibility that dark electrons generated at a trap level may flow in an avalanche intensification area, and the amount of dark electric current may differ in area depending on the number of times of flow-in of large amounts of electric current due to the avalanche amplification. In other words, with cumulative counts of the number of times of the avalanche amplification on each pixel or area in the SPAD sensor, changes in image quality due to variations of dark electric current can be correctly determined.

Counting the number of times of the avalanche amplification on each pixel makes it possible to determine a change in image characteristics more accurately, which is advantageous. On the other hand, with a larger number of pixels in the image sensor, recording the number of times of the avalanche amplification on each pixel entails a large amount of data. Thus, counts of the number of times of the avalanche amplification on each area makes it possible to appropriately determine a change in image characteristics with a reduced amount of data.

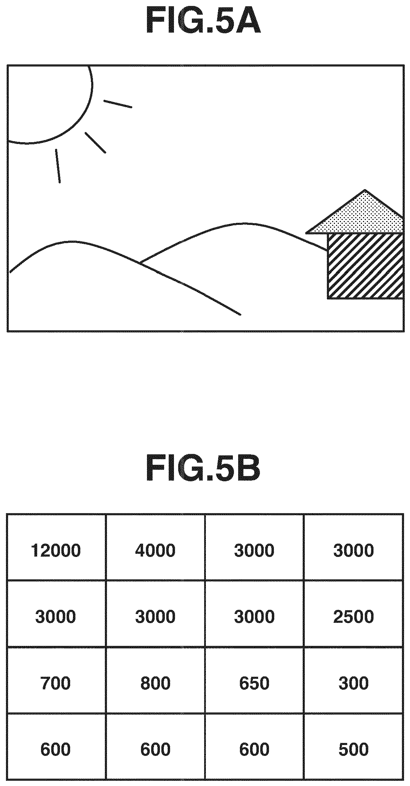

First, consider a case where the second image signal value is obtained from each area on an image and accumulated. Fig. 5A illustrates an example of an image captured with the SPAD sensor. In the image, mountain forests, a backlit building, the sky, and the sun are included. The second image signal value from the sun is extremely high, and the others lower in the order of the sky, the mountain forests, and the backlit building. Fig. 5B illustrates the second image signal values obtained from respective individual areas obtained by dividing the image into 4 horizontal areas and 4 vertical areas. In Fig. 5B, the second image signal value obtained from the image area including the sun is extremely high, and the image signal value obtained from the image area including the backlit building is low. In the present embodiment, second image signal values may be obtained from each color of a Bayer pattern image, or may be obtained for each color or for each brightness of a YCC image or a YUV image. Further, the number of image signal value divisions by area is not limited to 4 × 4, and 8 × 8 or 16 × 16 divisions may be employed as long as the storage area accommodates it. Further, in the present embodiment, the example of obtaining the average value of the image signal values from each area has been described, but the second image signal value may be obtained as a statistical value, such as the sum of the image signal values in the area, and the median value of the image signal values in an area. In addition, a description is given of a case of calculating a cumulative value of each area as an example, but if there is an enough recording area and an allowance for calculation cost, the signal values may be obtained not from each area but from each pixel, to perform calculation processing.

As described above, the obtained second image signal value of each area is subjected to the transformation processing on the number of pulses. As a result, the image signal value is different from the number of times of the avalanche amplification in a strict sense. In the flowchart illustrated in Fig. 3, the digital gain processing and the linear transformation processing are applied, but to calculate the number of pulses of the avalanche amplification from the image signal value, it is necessary to perform the inverse transformation processing of converting back the applied transformation and then estimate the number of occurrence times of the avalanche amplification. With reference to a flowchart in Fig. 6, a processing procedure of outputting an estimation value of the number of times of the avalanche amplification from an image signal will be described.

Upon starting the imaging apparatus 1, in step S600, the control calculation unit 17 captures an image using the SPAD sensor to obtain the second image signal value. The image is captured based on the image signal subjected to the linear transformation processing and the digital gain processing in Fig. 3. In step S601, the control calculation unit 17 performs inverse transformation processing on the portion of the obtained image signal value corresponding to the amplification with the digital gain. In addition, if processing other than the digital gain processing is performed, processing for converting back the transformation processing is performed. In step S602, the control calculation unit 17 obtains a sensor estimation value that is non-linear to the number of photons through inverse transformation of the linear transformation on the image signal value transformed in step S601. The sensor estimation value is a value obtained by estimating the number of times of the avalanche amplification on each area.

In addition, the number of times of the avalanche amplification that has occurred since imaging starts is referred to as a cumulative value. In step S605, the control calculation unit 17 determines whether to end the imaging performed by the imaging apparatus 1. In a case where the imaging is continued (NO in step S605), the sensor estimation value calculated this time is added to the cumulative value and recorded. Then, the processing returns to step S600 to repeat the processing in steps S601 to 605.

If the control calculation unit 17 receives an end instruction from a user (YES in step S605), the control calculation unit 17 ends the imaging. In addition, a series of transformation processing (digital gain processing) may be performed every predetermined number of frames, or may be performed for each frame, to obtain the number of times of the avalanche amplification. In this case, the number of pulses transformed in the repetition processing continues to be accumulated on each area while the image continues to be captured, as the sensor estimation value, during the time in which the image is captured via the start of the imaging. This continued operation allows determination as to how many times per pixel of the SPAD sensor the avalanche amplification repeats on each area. In this case, the cumulative value can be an astronomical value depending on the brightness of an object to be captured and the operation period. Thus, the cumulative value may be held in logarithmic representation, or floating decimal point representation. Further, the cumulative value may be separated into the exponential part and the integral part to be held in a non-volatile storage medium. Further, the sensor estimation value is not necessarily required to be accumulated for all the continuous frames in use for continuously imaging a fixed object for a long time, such as using a monitoring camera, and the number of pulses from each area in an image may be calculated at regular intervals and accumulated.

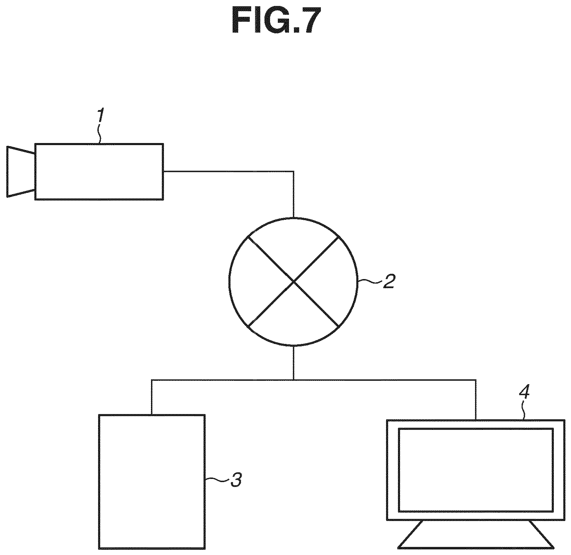

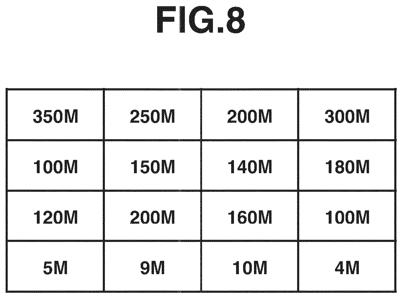

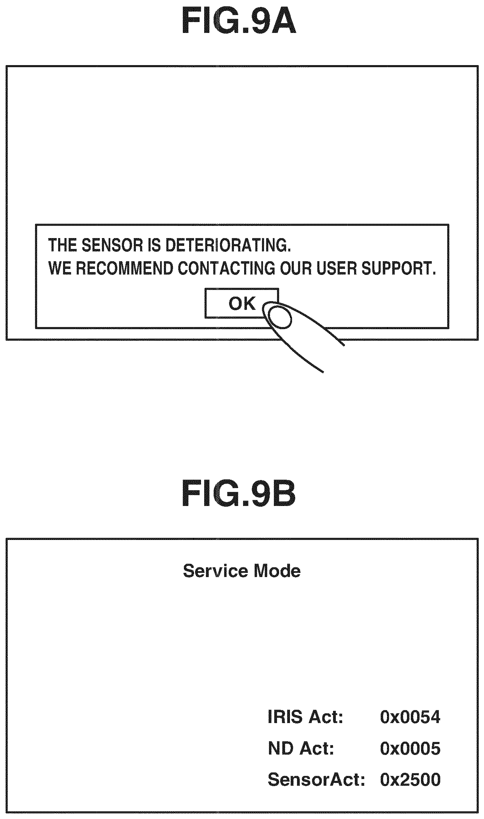

The use of the estimated number of times of the avalanche amplification occurrences (cumulative value) will be described. An example of an imaging system including the imaging apparatus 1 serving as a monitoring camera will be described with reference to Fig. 7. Fig. 8 illustrates an example of a cumulative value of the avalanche amplification of each area. A provider of the SPAD sensor can determine in advance a cumulative value to be a target of the sensor replacement time out of cumulative values of the avalanche amplification. For example, focusing on the maximum value of the cumulative values of the respective individual areas, it is assumed that an area within the image can be determined to have deteriorated exceeding the state corresponding to the target of replacing the sensor if the maximum value 350M exceeds a predetermined number of times M. In this case, the control calculation unit 17 may determine whether the cumulative value of the avalanche amplification exceeds the predetermined number of times, to output information indicating the state of the image sensor unit 11 based on the determination result. More specifically, the imaging apparatus 1 may display a warning to prompt a user to replace the sensor as illustrated in Fig. 9A, if the maximum value of the cumulative values of the respective individual areas exceeds the predetermined number of times. The information indicating the state of the image sensor unit 11 may be information indicating the necessity of replacing the sensor of the imaging apparatus 1.

Further, if the expected usage life of the imaging apparatus 1 is determined in advance, the current total operation time and the cumulative value of each area may be compared to change the warning details. Examples of the warning method include issuing a warning by determining whether the cumulative value is expected to exceed M [times] within the usage life if the imaging apparatus 1 continues to be used at the current pace.

Further, the cumulative value may be directly displayed on a display device in an operation mode used by a user support department, as one of the use methods for the cumulative value. As illustrated in Fig. 9B, with the cumulative value of the avalanche amplification being displayed alongside times a consumable part, such as an aperture and an ND, is used, the user support department can use the display of the displayed cumulative value as a target of the sensor replacement based on the cumulative value. In this case, all the cumulative values of the respective individual areas may be displayed, or only a maximum value of the cumulative values may be displayed. Further, a display device other than the imaging apparatus 1 can be used. More specifically, the imaging apparatus 1 and a communication terminal may be connected to display the cumulative value on a display device of the communication terminal, or data on the cumulative value may be transmitted to the terminal to store therein. For example, as illustrated in the system configuration example of Fig. 7, there may be a case where with the imaging apparatus 1 connected to a network 2 wirelessly or by wire, a video image is recorded and analyzed by a server 3, and monitored by an external apparatus 4. In this case, the cumulative value is output to the external apparatus 4 via the communication unit 19 of the imaging apparatus 1. Further, the output value may be the cumulative value, a rounded approximate value of the cumulative value, or an index of a degradation level based on the cumulative value. In other words, the imaging apparatus 1 includes a setting unit configured to set the operation mode to notify a user of the number of times of the avalanche amplification in the photoelectric conversion device estimated in a plurality of images. Further, an information processing apparatus, such as a communication terminal, connected to the imaging apparatus 1 via a network or the like includes an output unit configured to output notification information, based on the number of times of the avalanche amplification with the imaging apparatus 1 set to the operation mode.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card, and the like.

While the present invention has been described with reference to embodiments, it is to be understood that the invention is not limited to the disclosed embodiments but is defined by the scope of the following claims.

## Claims

1. An imaging apparatus (1) including a photoelectric conversion device (11) including an avalanche photodiode for photoelectrically converting an optical image, the imaging apparatus comprising:
a signal processing unit (12) configured to generate an image signal based on an output signal from the photoelectric conversion device (11); and
a control calculation unit (17) configured to perform predetermined transformation processing based on the image signal generated by the signal processing unit (12) to calculate a number of times of avalanche amplification occurrences calculated from each of a plurality of image signals each being the image signal generated by the signal processing unit,
wherein the control calculation unit (17) is configured to calculate a cumulative value of the number of times of the avalanche amplification occurrences within the usage life of the imaging apparatus (1) by summing the number of times of the avalanche amplification occurrences, and
wherein the control calculation unit (17) is configured to output the cumulative value of the number of times of the avalanche amplification occurrences.

2. The imaging apparatus according to claim 1,
wherein the signal processing unit (12) is configured to generate the image signal for each of areas in the photoelectric conversion device, and
wherein the control calculation unit (17) is configured to calculate the cumulative value of the number of times of the avalanche amplification occurrences on each of the areas.

3. The imaging apparatus according to claim 2,
wherein each of the areas corresponds to one pixel in the photoelectric conversion device.

4. The imaging apparatus according to any one of the preceding claims, wherein the control calculation unit (17) is configured to output information to notify a user based on the number of times of the avalanche amplification occurrences.

5. The imaging apparatus according to any one of the preceding claims, further comprising a recording unit configured to record an operation time of the photoelectric conversion device (11),
wherein the control calculation unit (17) is configured to determine information to notify a user based on the cumulative value of the number of times of the avalanche amplification occurrences for each of the plurality of image signals, and the operation time of the photoelectric conversion device (11).

6. The imaging apparatus according to any one of the preceding claims,
wherein the output signal from the photoelectric conversion device (11) indicates a number of pulses of the avalanche amplification occurrences in the photoelectric conversion device (11),
wherein the signal processing unit (12) is configured to generate the image signal by transforming the output signal by the predetermined transformation processing, and
wherein the predetermined transformation processing performed by the control calculation unit (17) on the image signal is inverse transformation processing of the predetermined transformation processing performed by the signal processing unit (12).

7. The imaging apparatus according to claim 6, wherein the predetermined transformation processing performed by the signal processing unit (12) includes at least one of digital gain processing and linear transformation processing on a characteristic value of the photoelectric conversion device (11).

8. The imaging apparatus according to claim 7, wherein the digital gain processing is performed based on a digital gain determined for each frame.

9. The imaging apparatus according to claim 1, further comprising a recording unit configured to record the cumulative value of the number of times of the avalanche amplification occurrences output by the control calculation unit (17).

10. The imaging apparatus according to claim 1 or 9, wherein the control calculation unit (17) is configured to output information to notify a user in a case where the cumulative value of times of the avalanche amplification occurrences exceeds a predetermined number of times.

11. The imaging apparatus according to claim 2 or 3, wherein the control calculation unit (17) is configured to output information to notify a user based on a maximum value of cumulative values of the numbers of times of the avalanche amplification occurrences on each of the areas.

12. A method for controlling an imaging apparatus including a photoelectric conversion device (11) including an avalanche photodiode for photoelectrically converting an optical image, the method comprising:
generating an image signal based on an output signal from the photoelectric conversion device (11),
calculating a number of times of avalanche amplification occurrences calculated from each of a plurality of image signals by performing predetermined transformation processing based on the generated image signal,
calculating a cumulative value of the number of times of the avalanche amplification occurrences within the usage life of the imaging apparatus by summing the number of times of the avalanche amplification occurrences, and
outputting the cumulative value of the number of times of the avalanche amplification occurrences.

13. A computer program comprising instructions for controlling a computer to carry out a method according to claim 12.

14. A non-transitory computer-readable storage medium storing the computer program according to claim 13.

## Patentansprüche

1. Bildgebungsvorrichtung (1) mit einer Einrichtung zur photoelektrischen Umwandlung (11) mit einer Lawinenphotodiode zum photoelektrischen Umwandeln eines optischen Bildes, wobei die Bildgebungsvorrichtung umfasst:
eine Signalverarbeitungseinheit (12), die konfiguriert ist, ein Bildsignal basierend auf einem Ausgabesignal von der Einrichtung zur photoelektrischen Umwandlung (11) zu erzeugen; und
eine Steuerungsberechnungseinheit (17), die konfiguriert ist, eine vorbestimmte Transformationsverarbeitung basierend auf dem von der Signalverarbeitungseinheit (12) erzeugten Bildsignal durchzuführen, um eine Anzahl von Lawinenverstärkungsereignissen zu berechnen, die aus einem jeweiligen von mehreren Bildsignalen berechnet werden, die jeweils das von der Signalverarbeitungseinheit erzeugte Bildsignal sind,
wobei die Steuerungsberechnungseinheit (17) konfiguriert ist, einen kumulativen Wert der Anzahl der Lawinenverstärkungsereignisse innerhalb der Nutzungsdauer der Bildgebungsvorrichtung (1) durch Summieren der Anzahl der Lawinenverstärkungsereignisse zu berechnen, und
wobei die Steuerungsberechnungseinheit (17) konfiguriert ist, den kumulativen Wert der Anzahl der Lawinenverstärkungsereignisse auszugeben.

2. Bildgebungsvorrichtung nach Anspruch 1,
wobei die Signalverarbeitungseinheit (12) konfiguriert ist, das Bildsignal für ein jeweiliges von Gebieten in der Einrichtung zur photoelektrischen Umwandlung zu erzeugen, und
wobei die Steuerungsberechnungseinheit (17) konfiguriert ist, den kumulativen Wert der Anzahl der Lawinenverstärkungsereignisse auf einem jeweiligen der Gebiete zu berechnen.

3. Bildgebungsvorrichtung nach Anspruch 2, wobei ein jeweiliges der Gebiete einem Pixel in der Einrichtung zur photoelektrischen Umwandlung entspricht.

4. Bildgebungsvorrichtung nach einem der vorhergehenden Ansprüche, wobei die Steuerungsberechnungseinheit (17) konfiguriert ist, Information auszugeben, um einen Benutzer zu benachrichtigen, basierend auf der Anzahl der Lawinenverstärkungsereignisse.

5. Bildgebungsvorrichtung nach einem der vorhergehenden Ansprüche, ferner umfassend eine Aufzeichnungseinheit, die konfiguriert ist, eine Betriebszeit der Einrichtung zur photoelektrischen Umwandlung (11) aufzuzeichnen,
wobei die Steuerungsberechnungseinheit (17) konfiguriert ist, Information, um einen Benutzer zu benachrichtigen, basierend auf dem kumulativen Wert der Anzahl der Lawinenverstärkungsereignisse für ein jeweiliges der mehreren Bildsignale und der Betriebszeit der Einrichtung zur photoelektrischen Umwandlung (11) zu bestimmen.

6. Bildgebungsvorrichtung nach einem der vorhergehenden Ansprüche,
wobei das Ausgabesignal von der Einrichtung zur photoelektrischen Umwandlung (11) eine Anzahl von Impulsen der Lawinenverstärkungsereignisse in der Einrichtung zur photoelektrischen Umwandlung (11) angibt,
wobei die Signalverarbeitungseinheit (12) konfiguriert ist, das Bildsignal durch Transformieren des Ausgabesignals durch die vorbestimmte Transformationsverarbeitung zu erzeugen, und
wobei die von der Steuerungsberechnungseinheit (17) am Bildsignal durchgeführte vorbestimmte Transformationsverarbeitung eine inverse Transformationsverarbeitung der von der Signalverarbeitungseinheit (12) durchgeführten vorbestimmten Transformationsverarbeitung ist.

7. Bildgebungsvorrichtung nach Anspruch 6, wobei die von der Signalverarbeitungseinheit (12) durchgeführte vorbestimmte Transformationsverarbeitung eine Verarbeitung zur digitalen Verstärkung und/oder eine Verarbeitung zur linearen Transformation an einem Kennwert der Einrichtung zur photoelektrischen Umwandlung (11) enthält.

8. Bildgebungsvorrichtung nach Anspruch 7, wobei die Verarbeitung zur digitalen Verstärkung basierend auf einer für ein jeweiliges Einzelbild bestimmten digitalen Verstärkung durchgeführt wird.

9. Bildgebungsvorrichtung nach Anspruch 1, ferner umfassend eine Aufzeichnungseinheit, die konfiguriert ist, den von der Steuerungsberechnungseinheit (17) ausgegebenen kumulativen Wert der Anzahl der Lawinenverstärkungsereignisse aufzuzeichnen.

10. Bildgebungsvorrichtung nach Anspruch 1 oder 9, wobei die Steuerungsberechnungseinheit (17) konfiguriert ist, Information auszugeben, um einen Benutzer in einem Fall zu benachrichtigen, in welchem der kumulative Wert der Anzahl der Lawinenverstärkungsereignisse eine vorbestimmte Anzahl überschreitet.

11. Bildgebungsvorrichtung nach Anspruch 2 oder 3, wobei die Steuerungsberechnungseinheit (17) konfiguriert ist, Information auszugeben, um einen Benutzer zu benachrichtigen, basierend auf einem Maximalwert von kumulativen Werten der Anzahl der Lawinenverstärkungsereignisse auf den jeweiligen Gebieten.

12. Verfahren zum Steuern einer Bildgebungsvorrichtung mit einer Einrichtung zur photoelektrischen Umwandlung (11) mit einer Lawinenphotodiode zum photoelektrischen Umwandeln eines optischen Bildes, wobei das Verfahren umfasst:
Erzeugen eines Bildsignals basierend auf einem Ausgabesignal von der Einrichtung zur photoelektrischen Umwandlung (11),
Berechnen einer Anzahl von Lawinenverstärkungsereignissen, die aus einem jeweiligen von mehreren Bildsignalen berechnet wird, durch Durchführen einer vorbestimmten Transformationsverarbeitung basierend auf dem erzeugten Bildsignal,
Berechnen eines kumulativen Werts der Anzahl der Lawinenverstärkungsereignisse innerhalb der Nutzungsdauer der Bildgebungsvorrichtung durch Summieren der Anzahl der Lawinenverstärkungsereignisse, und
Ausgeben des kumulativen Werts der Anzahl der Lawinenverstärkungsereignisse.

13. Computerprogramm, umfassend Anweisungen zum Steuern eines Computers, um ein Verfahren nach Anspruch 12 auszuführen.

14. Nichtflüchtiges computerlesbares Speichermedium, welches das Computerprogramm nach Anspruch 13 speichert.

## Revendications

1. Appareil d'imagerie (1) comprenant un dispositif de conversion photoélectrique (11) comprenant une photodiode à avalanche pour convertir photoélectriquement une image optique, l'appareil d'imagerie comprenant :
une unité de traitement de signal (12) configurée pour générer un signal d'image sur la base d'un signal de sortie provenant du dispositif de conversion photoélectrique (11) ; et
une unité de calcul de commande (17) configurée pour réaliser un traitement de transformation prédéterminé sur la base du signal d'image généré par l'unité de traitement de signal (12) pour calculer un nombre de fois d'occurrences d'amplification par avalanche calculé à partir de chacun d'une pluralité de signaux d'image, chacun étant le signal d'image généré par l'unité de traitement de signal,
dans lequel l'unité de calcul de commande (17) est configurée pour calculer une valeur cumulée du nombre de fois des occurrences d'amplification par avalanche pendant la durée de vie de l'appareil d'imagerie (1) en additionnant le nombre de fois des occurrences d'amplification par avalanche, et
dans lequel l'unité de calcul de commande (17) est configurée pour sortir la valeur cumulée du nombre de fois des occurrences d'amplification par avalanche.

2. Appareil d'imagerie selon la revendication 1,
dans lequel l'unité de traitement de signal (12) est configurée pour générer le signal d'image pour chacune des zones dans le dispositif de conversion photoélectrique, et dans lequel l'unité de calcul de commande (17) est configurée pour calculer la valeur cumulée du nombre de fois des occurrences d'amplification d'avalanche sur chacune des zones.

3. Appareil d'imagerie selon la revendication 2,
dans lequel chacune des zones correspond à un pixel dans le dispositif de conversion photoélectrique.

4. Appareil d'imagerie selon l'une quelconque des revendications précédentes, dans lequel l'unité de calcul de commande (17) est configurée pour sortir des informations pour avertir un utilisateur sur la base du nombre de fois des occurrences d'amplification par avalanche.

5. Appareil d'imagerie selon l'une quelconque des revendications précédentes, comprenant en outre une unité d'enregistrement configurée pour enregistrer un temps de fonctionnement du dispositif de conversion photoélectrique (11),
dans lequel l'unité de calcul de commande (17) est configurée pour déterminer des informations pour avertir un utilisateur sur la base de la valeur cumulée du nombre de fois des occurrences d'amplification par avalanche pour chacun de la pluralité de signaux d'image, et du temps de fonctionnement du dispositif de conversion photoélectrique (11).

6. Appareil d'imagerie selon l'une quelconque des revendications précédentes,
dans lequel le signal de sortie provenant du dispositif de conversion photoélectrique (11) indique un nombre d'impulsions des occurrences d'amplification par avalanche dans le dispositif de conversion photoélectrique (11),
dans lequel l'unité de traitement de signal (12) est configurée pour générer le signal d'image en transformant le signal de sortie par le traitement de transformation prédéterminé, et
dans lequel le traitement de transformation prédéterminé réalisé par l'unité de calcul de commande (17) sur le signal d'image est un traitement de transformation inverse du traitement de transformation prédéterminé réalisé par l'unité de traitement de signal (12).

7. Appareil d'imagerie selon la revendication 6, dans lequel le traitement de transformation prédéterminé réalisé par l'unité de traitement de signal (12) comprend au moins un parmi un traitement à gain numérique et un traitement de transformation linéaire sur une valeur caractéristique du dispositif de conversion photoélectrique (11).

8. Appareil d'imagerie selon la revendication 7, dans lequel le traitement à gain numérique est réalisé sur la base d'un gain numérique déterminé pour chaque trame.

9. Appareil d'imagerie selon la revendication 1, comprenant en outre une unité d'enregistrement configurée pour enregistrer la valeur cumulée du nombre de fois des occurrences d'amplification par avalanche sortie par l'unité de calcul de commande (17).

10. Appareil d'imagerie selon la revendication 1 ou 9, dans lequel l'unité de calcul de commande (17) est configurée pour sortir des informations pour avertir un utilisateur dans un cas où la valeur cumulée de fois des occurrences d'amplification par avalanche dépasse un nombre de fois prédéterminé.

11. Appareil d'imagerie selon la revendication 2 ou 3, dans lequel l'unité de calcul de commande (17) est configurée pour sortir des informations pour avertir un utilisateur sur la base d'une valeur maximale de valeurs cumulées des nombres de fois des occurrences d'amplification par avalanche sur chacune des zones.

12. Procédé pour commander un appareil d'imagerie comprenant un dispositif de conversion photoélectrique (11) comprenant une photodiode à avalanche pour convertir photoélectriquement une image optique, le procédé comprenant :
la génération d'un signal d'image sur la base d'un signal de sortie provenant du dispositif de conversion photoélectrique (11),
le calcul d'un nombre de fois d'occurrences d'amplification par avalanche calculé à partir de chacun d'une pluralité de signaux d'image en réalisant un traitement de transformation prédéterminé sur la base du signal d'image généré,
le calcul d'une valeur cumulée du nombre de fois des occurrences d'amplification par avalanche pendant la durée de vie de l'appareil d'imagerie en additionnant le nombre de fois des occurrences d'amplification par avalanche, et la sortie de la valeur cumulée du nombre de fois des occurrences d'amplification par avalanche.

13. Programme d'ordinateur comprenant des instructions pour commander un ordinateur pour mettre en œuvre un procédé selon la revendication 12.

14. Support de stockage non transitoire lisible par ordinateur stockant le programme d'ordinateur selon la revendication 13.
